# EUROPEAN PATENT APPLICATION

(11) **EP 1 988 119 A1**
(43) Date of publication of application: **05.11.2008**
(21) Application number: 07075321.5
(22) Date of filing: 01.05.2007
(51) Int. Cl.: C08J 9/00, C08F 255/00, C08F 279/02, C08L 25/06, C08L 51/04

(54) **Expandable polystyrene composition**

(71) Applicant: Nova Innovene International S.A., 1700 Fribourg (CH)
(72) Inventor: Rijkse, Marieke Albertine, 4824 KH Breda (NL); Metsaars, Alphonsus Catharina Gerardus, 5121 ZM Rijen (NL)
(74) Representative: Preece, Michael

(57) **Abstract**

An expandable polystyrene composition is disclosed comprising :
(1) 100 parts by weight of a polymer of styrene having in particular a weight-average molecular mass Mw ranging from 150 000 to 600 000 daltons,
(2) from 2 to 20 parts by weight of at least one blowing agent, and
(3) from 5 to less than 25 parts by weight of a masterbatch wherein the masterbatch comprises a filler and a rubber.

A particularly preferred filler is carbon black.

## Description

The present invention relates to an expandable polystyrene composition comprising a filler for example a carbon black, to a process for preparing the composition and its use, and to the expanded articles resulting from the use.

Fillers are used in expandable polystyrene for a variety of reasons. In all cases the fillers are in the form of a particulate or fibrous material. A filler of particular interest is carbon black.

Carbon black has been known for a long time to be used as a filler or pigment in amounts up to, for example of the order of 50% by weight, or else as a nucleating agent, in a lesser amount, in polymer foams such as polyethylene, polypropylene, polystyrene or polyurethane foams, though generally without the type of carbon black used being specified. It is known, for example, from Kirk-Othmer, Encyclopedia of Chemical Technology, published by John Wiley & Sons, 4th edition, Vol. 4, pages 1037 to 1074, that carbon black exists in various physical forms, depending in particular on the manufacturing process. Accordingly, among the various types of carbon black, a distinction is made between oil furnace black (petroleum black), gas furnace black, acetylene black, lamp black, flame black (smoke black), channel black (carbon black obtained by small-flame combustion), thermal black, and electrically conductive carbon black. Electrically conductive carbon black differs from the other carbon blacks in particular in an extremely high specific surface area.

Also known is the use of carbon black in polymer foams, in a relatively large amount, of up to 25% by weight for example, as a thermal insulator or as an absorber/reflector of infrared radiation. For instance, American patents US 4,795,763 and US 5,149,722 disclose polyethylene, polypropylene and polystyrene foams

International patent application WO 90/06339 discloses a polystyrene foam containing from 1.0% to 25% by weight, relative to the polymer, of a carbon black having a specific surface area of from 10 to 1500 m²/g. In particular, a polystyrene foam is prepared by extruding a mixture comprising a melted polystyrene, a blowing agent and 5.0% by weight, relative to the polymer, of a carbon black having a specific surface area of 1475 m²/g.

International patent application WO 97/45477 discloses an expandable polystyrene containing from 0.05% to 25%, preferably from 2% to 8%, by weight, relative to the polymer, of a carbon black which can have a BET specific surface area of from 10 to 500 m²/g. Such a polystyrene exhibits improved thermal insulation and flame retardancy properties. By way of example an expandable polystyrene is shown which is prepared by extruding a mixture comprising a melted polystyrene, a blowing agent and 6% by weight, relative to the polymer, of a flame black (or lamp black) known under the trade name Flammruss FL 101^{®} sold by Degussa (Germany).

European patent application EP 0 620 246 discloses a polystyrene foam prepared from polystyrene particles containing a blowing agent and enveloped with an infrared absorber selected from aluminium powder, graphite and carbon black, in a proportion of from 0.5% to 5% by weight relative to the polymer. However, the type of carbon black used is not specified. It has been observed, moreover, that the envelopment of polystyrene particles with an absorber of this kind makes it possible to obtain neither a uniform dispersion of the agent in the particles nor satisfactory thermal insulation properties.

However one of the problems of the prior art compositions is while a variety of properties can be enhanced by various fillers, addition of these fillers, for example in the suspension polymerisation process, can impair one or more of the mechanical properties of any EPS foam produced from the polystyrene beads. We have now found that by introducing the filler e.g. carbon black as a masterbatch in rubber, the reduction in mechanical properties are reduced or minimised while retaining other properties such as thermal or electrical properties.

One of the objects of the present invention is to provide an expandable polystyrene composition capable of producing a polystyrene foam having maximum thermal insulation for a given charge of carbon black, while maintaining mechanical properties at an acceptable level. In other words the object is to provide an expandable polystyrene composition capable of producing expanded articles having the optimum physical properties for a given level of performance in terms of thermal insulation. It has been observed that good results are obtained when the filler e.g. carbon black is added as a masterbatch in admixture with a rubber, prior to or during polymerisation, the masterbatch typically being dissolved or homogeneously distributed in styrene.

The present invention first provides an expandable polystyrene composition comprising:
(1) 100 parts by weight of a polymer of styrene having in particular a weight-average molecular mass Mw ranging from 150 000 to 600 000 daltons,
(2) from 2 to 20 parts by weight of at least one blowing agent, and
(3) from 5 to less than 25 parts by weight of a masterbatch wherein the masterbatch comprises a filler and a rubber.

A further feature of the present invention is a process for preparing an expandable polystyrene composition comprising a filler in particular carbon black wherein the filler is introduced into a polymerisation step in the form of a masterbatch wherein the masterbatch comprises the filler and a rubber, the masterbatch typically being dissolved or homogeneously distributed in styrene.

The masterbatch comprises a filler and a rubber in the proportions 1-50 / 99-50% preferably 30-50 / 70-50% most preferably 30-40 / 70-60% by weight. The weight of styrene used to dissolve or homogeneously distribute the masterbatch is in the range 75 to 95 preferably 80 to 90% based on the total weight of the masterbatch and the styrene in which the masterbatch is dissolved or homogeneously distributed. The filler in the masterbatch can be any particulate or fibrous solid and for example can be selected from carbon black, graphite, titanium dioxide, calcium carbonate, barium sulphate, calcium sulphate, pigments, silicon dioxide, talk, clay, zeolites, diatomaceous earth, magnesium oxide, aluminium, aluminium oxides, zirconium, zirconium oxides, cokes, chars, diamonds dust, carbon nanotubes and combinations thereof. Alternatively a fibrous material such as glass fibre or carbon fibre can be used.

Preferably the filler is an infra-red attenuating agent for example carbon black or graphite, most preferably carbon black.

The rubber can be any natural or synthetic high molecular weight polymer having properties of deformation (elongation or yield under stress) of a typical rubber and elastic recovery after vulcanisation with sulphur or other cross-linking agent which changes the polymer from thermoplastic to thermosetting. A rubber would typically have a Tg below - 10°C preferably below -20°C. The term rubber also includes elastomers which are synthetic thermosetting high molecular weight polymers having properties similar to those of vulcanised natural rubber. Typical elastomers include styrene - butadiene copolymer, polychloroprene, nitrile rubber, butyl rubber, ethylene-propylene terpolymers (EPDM rubbers), and polybutadiene, preferably EPDM.

The rubber, which includes the term elastomer, should be dissolvable in styrene. A typical rubber would be Keltan 312 EPDM (ex DSM) or other commercially available rubbers. Other additives can be added to the masterbatch for example flame retardants. Some of these additives may be in addition to or instead of the additives that would typically be added directly to the polymerisation mixture.

A preferred composition according to the present invention comprises;
(1) 100 parts by weight of a polymer of styrene having a weight-average molecular mass Mw ranging from 150000 to 600000 daltons,
(2) from 2 to 20 parts by weight of at least one blowing agent and
(3) from 5 to less than 25 by weight of a masterbatch wherein the masterbatch comprises carbon black and a rubber.

It has in effect been found, surprisingly, that by virtue of adding the filler as a masterbatch in admixture with a rubber the masterbatch typically being dissolved or homogeneouosly distributed in styrene the reduction in mechanical properties is minimised while maintaining the thermal and electrical properties compared to white EPS with the same amount of carbon black.

According to the present invention the expandable polystyrene composition comprises a masterbatch which comprises a filler, and a rubber.

It is a feature of the expandable polystyrene of the present invention that it is less sensitive to the type of carbon black employed than the products of the prior art. This is because the mechanical properties are less affected than the thermal insulation properties by use of carbon black as herein described. Consequently, the carbon black may be selected from any carbon black. For example, the carbon black may be selected from carbon blacks having a very low pore volume, as measured by dibutyl phthalate absorption (DBPA) according to method ASTM D 2414, having for example a value of more than 60 ml/100 g, in particular ranging from 20 to 300 ml/100 g, preferably from 30 to 100 ml/100 g. The carbon black may be in the form of solid aggregates with in particular a relatively low size, measured according to method ASTM D 3849, having for example a value ranging from 10 to 100 nm, preferably from 10 to 50 nm, in particular from 10 to 30 nm. By way of example it is possible to use a carbon black from among the electrically conductive carbon blacks sold under the trade names Ketjenblack EC300J^{®} and Ketjenblack EC600JD^{®} by Akzo Nobel (Netherlands).

The composition according to the invention is termed expandable, which is to say that it comprises a blowing agent and that the styrene polymer is capable of expansion by virtue of the presence of the blowing agent. The composition is preferably a homogeneous composition, i.e. one in which the masterbatch is distributed uniformly throughout the composition. The composition may be in the form of particles or, preferably, of expandable beads. By beads are meant, generally, spherical or substantially spherical particles, in particular spheroidal particles which may have a large diameter and a small diameter, with a ratio between the large diameter and the small diameter ranging in particular from 1.0 to 1.3, preferably from 1.0 to 1.2. The expandable particles or beads may have an average size ranging from 0.3 to 3 mm, preferably from 0.3 to 2 mm, in particular from 0.4 to 1.5 mm. They may also have a bulk density (or apparent density), measured according to method ASTM D 1622, ranging from 550 to 720 kg/m³, preferably from 580 to 710 kg/m³, in particular from 600 to 770 kg/m³. The composition may advantageously be in the form of particles or beads and is preferably homogeneous, such that the masterbatch is distributed uniformly inside each expandable particle or bead.

The composition comprises a styrene polymer, which may be a homopolymer or a copolymer of styrene, containing at least 50%, preferably at least 80% and in particular at least 90% by weight of styrene. The comonomer or comonomers present in the styrene copolymer may be selected from vinylaromatic compounds, in particular from alpha-methylstyrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. Preference is given to using a homopolystyrene. The weight-average molecular mass, Mw, of the styrene polymer may be in a range extending from 150 000 to 600 000 daltons, preferably from 160 000 to 500 000 daltons, in particular from 170 000 to 450 000 daltons. The distribution of the molecular masses of the styrene polymer, calculated by the ratio of Mw to the number-average molecular mass Mn of the polymer, may range from 1.5 to 4.0, preferably from 1.7 to 3.5, in particular from 1.8 to 3.0. The styrene polymer may advantageously have a relatively low level of residual monomer and, where appropriate, of residual comonomer(s), despite the presence of the carbon black, which is known to be a polymerization inhibitor: for example, the amount may be less than or equal to 2000 parts by weight per million (ppm), preferably equal to or less than 1000 ppm. The composition comprises, per 100 parts by weight of styrene polymer, from 2 to 20 parts, preferably from 3 to 15 parts and in particular from 3 to 10 parts by weight of at least one blowing agent. The blowing agent may be selected from aliphatic or cyclic, optionally fluorinated, hydrocarbons, carbon dioxide, water and mixtures of two or more of these compounds. More particularly it may be selected from Freons, linear or branched saturated hydrocarbons and cyclic saturated hydrocarbons, preferably C₃ to C₇ hydrocarbons, in particular C₄ to C₆ hydrocarbons, such as n-butane, isobutane, n-pentane, isopentane, n-hexane or isohexane, carbon dioxide, water and mixtures of two or more of these compounds, especially mixtures of two or more of these hydrocarbons, mixtures of carbon dioxide with water, mixtures of carbon dioxide with at least one of these hydrocarbons, or mixtures of water with at least one of these hydrocarbons and, optionally, carbon dioxide.

The composition may further comprise at least one additive selected from flame retardants, nucleating agents, plasticizers and agents which facilitate the demoulding of the moulded and expanded articles. In particular it may comprise at least one flame retardant selected in particular from halogenated hydrocarbons, preferably brominated hydrocarbons, in particular C₆ to C₁₂ hydrocarbons, such as hexabromocyclohexane, pentabromomonochlorocyclohexane or hexabromocyclododecane, in an amount which can range from 0.05 to 2 parts, preferably from 0.1 to 1.5 parts, by weight, per 100 parts by weight of the styrene polymer. The composition may further comprise at least one nucleating agent selected in particular from synthetic waxes, in particular Fischer-Tropsch waxes and polyolefin waxes such as polyethylene waxes or polypropylene waxes, in an amount which can range from 0.05 to 1 part, preferably from 0.1 to 0.5 part, by weight per 100 parts by weight of the styrene polymer. The composition may likewise comprise at least one plasticizer, selected in particular from mineral oils and petroleum waxes such as paraffin waxes, in an amount which can range from 0.1 to 1 part, preferably from 0.1 to 0.8 part, by weight per 100 parts by weight of the styrene polymer. The composition may additionally comprise at least one agent which facilitates the demoulding of the moulded and expanded articles, selected in particular from inorganic salts and esters of stearic acid, such as glycerol mono-, di- or tristearates and zinc stearate, calcium stearate or magnesium stearate, in an amount which can range from 0.05 to 1 part, preferably from 0.1 to 0.6 part, by weight per 100 parts by weight of the styrene polymer.

The present invention also pertains to another process for preparing the composition which is in the form, in particular, of expandable particles or, preferably, expandable beads. The process comprises a step of polymerizing styrene and optionally at least one comonomer as mentioned above in aqueous suspension, followed by a step of separating off and eliminating the aqueous phase, and isolating the composition in particular in the form of expandable particles or beads. The polymerization in aqueous suspension may be carried out with stirring, in the presence of at least one free-radical polymerization initiator, at least one suspension stabilizer, blowing agent or agents, the blowing agent(s) being present in an amount which can range from 3 to 20, preferably 5-10 by weight parts by weight per 100 parts by weight of styrene, and carbon black/rubber masterbatch in an amount which can range from 5 to less than 20 parts, preferably from 7 to 15 parts, in particular from 10 to 12 parts of the carbon black and rubber by weight per 100 parts by weight of styrene and optionally of comonomer(s) used in the polymerization.

It is preferred that a prepolymerisation step is carried out in which masterbatch of a filler, preferably carbon black, and a rubber dissolved or homogeneously distributed in styrene is subjected to a polymerisation prior to further polymerisation in aqueous suspension. In particular a masterbatch of filler and rubber is dissolved homogeneously distributed in styrene to which a free radical initiator is added. The free-radical polymerization initiator may be selected from mono-, di- and polyfunctional free-radical initiators, and in particular from peroxides, hydroperoxides, peroxycarbonates, perketals, peresters and azo compounds. It is preferably selected from difunctional or polyfunctional free-radical initiators and more particularly from peresters. It has been found particularly advantageous to carry out the polymerization in the presence of at least one free-radical polymerization initiator selected from cumylhydroperoxide, peresters, such as tert-butyl peroxy-2-ethylhexanoate, tert-butyl peroxyneodecanoate, tert-butyl peroxypivalate, tert-butyl peroxydiethylacetate, tert-butyl peroxyisobutyrate, tert-butyl peroxy-3,5,5-trimethyl-hexanoate, cumyl peroxyneodecanoate, tert-amyl peroxy-2-ethylhexanoate, tert-amyl peroxyneodecanoate, tert-amyl peroxypivalate, 2,5-bis(2-ethylhexanoylperoxy)-2,5-dimethylhexane or 2,4,4-trimethylpentyl-2-peroxyneodecanoate, or else from difunctional or polyfunctional free-radical initiators, such as 1,1-bis(tert-butylperoxy)-3,3,5-trimethylcyclohexane, 1,1-bis(tert-butylperoxy)cyclohexane, 2,5-bis(tert-butylperoxy)2,5-dimethylhexane, 2,2-bis(tert-butylperoxy)butane or bis(tert-butylperoxyisopropyl)benzene. The prepolymerisation is carried out at elevated temperature for example in the range 80-160 preferably 90-130 more preferably 100-125°C, preferably for a period of time such that phase inversion occurs. By phase inversion is meant the point at which the polystyrene becomes the continuous phase and the rubber solution the discontinuous phase. This usually occurs after about 20-40% by weight of the styrene has been polymerised. Polymerisation is thereafter carried out in aqueous suspension.

Polymerization in aqueous suspension may be carried out at a temperature ranging from 80 to 150°C, preferably from 85 to 140°C. It may be carried out with a weight ratio between the water and the styrene and optionally the comonomer(s) ranging from 0.8/1 to 5/1, preferably from 0.9/1 to 4/1. The polymerization may be continued for a time such that the amount of residual monomer and, where appropriate, of residual comonomer(s) is less than or equal to 2000 ppm, preferably less than or equal to 1000 ppm..

Polymerization in aqueous suspension is carried out in the presence of one or more free-radical polymerization initiators, in an amount which can range from 0.01 to 2 parts, preferably from 0.05 to 1 part by weight, per 100 parts by weight of monomer and optionally of comonomer(s). The free-radical polymerization initiator may be selected from mono-, di- and polyfunctional free-radical initiators, and in particular from peroxides, hydroperoxides, peroxycarbonates, perketals, peresters and azo compounds. It is preferably selected from difunctional or polyfunctional free-radical initiators and more particularly from peresters. It has been found particularly advantageous to carry out the polymerization in the presence of at least one free-radical polymerization initiator selected from cumylhydroperoxide, peresters, such as tert-butyl peroxy-2-ethylhexanoate, tert-butyl peroxyneodecanoate, tert-butyl peroxypivalate, tert-butyl peroxydiethylacetate, tert-butyl peroxyisobutyrate, tert-butyl peroxy-3,5,5-trimethylhexanoate, cumyl peroxyneodecanoate, tert-amyl peroxy-2-ethylhexanoate, tert-amyl peroxyneodecanoate, tert-amyl peroxypivalate, 2,5-bis(2-ethylhexanoylperoxy)-2,5-dimethylhexane or 2,4,4-trimethylpentyl-2-peroxyneodecanoate, or else from difunctional or polyfunctional free-radical initiators, such as 1,1-bis(tert-butylperoxy)-3,3,5-trimethylcyclohexane, 1,1-bis(tert-butylperoxy)cyclohexane, 2,5-bis(tert-butylperoxy)2,5-dimethylhexane, 2,2-bis(tert-butylperoxy)butane or bis(tert-butylperoxyisopropyl)benzene. In effect, these initiators make it possible to improve the yield of the polymerization reaction in spite of the presence of the carbon black. It is possible, accordingly, to manufacture a styrene polymer containing a very low amount of residual styrene and, where appropriate, of residual comonomer(s). The free-radical polymerization initiator or initiators may be introduced in its or their entirety at the beginning of polymerization or else part at the beginning and the remaining part in one or more portions during the polymerization.

Polymerization in aqueous suspension is preferably carried out in the presence of at least one suspension stabilizer, in particular at least one organic suspension stabilizer, selected in particular from polyvinyl alcohols, hydroxyethylcellulose, methylcellulose, sodium dodecylbenzenesulphonate, random copolymer of acrylic acid and ethylhexylacrylate starch, polyacrylamides and polyvinylpyrrolidones, or at least one inorganic suspension stabilizer, selected in particular from alumina, magnesium silicate, magnesium oxide, zinc oxide, calcium carbonate, calcium fluoride and inorganic salts of (pyro)phosphoric acid such as tricalcium phosphate, barium phosphate, aluminium phosphate or magnesium pyrophosphate. The amount of suspension stabilizer employed may be from 0.05 to 6 parts, preferably from 0.1 to 4 parts, by weight per 100 parts by weight of styrene and optionally of comonomer(s).

In order to improve the stability of the suspension it is also possible to carry out the polymerization in the presence of a styrene (pre)polymer different from or, preferably, identical to the polymer of the composition, in an amount which can range from 1 to 50 parts, preferably from 30 to 45 parts, by weight per 100 parts by weight of total employed. Thus it is possible, before beginning the polymerization, to form a solution, by addition and dissolution of the (pre)polymer of styrene in the monomer or, where appropriate, the comonomer(s). Thus it is possible to carry out prepolymerization in bulk or in a solution of styrene and, where appropriate, of one or more comonomers, until the above mentioned proportion of (pre)polymer is attained, and then to continue the polymerization in aqueous suspension in the presence in particular of the aforementioned reactants and additives.

Polymerization in aqueous suspension may be carried out in the presence of other additives, selected from chain transfer agents such as mercaptans and the dimers of alpha-methylstyrene, flame retardants such as halogenated hydrocarbons, preferably brominated hydrocarbons, in particular those mentioned above, crosslinking agents such as butadiene or divinylbenzene, plasticizers and nucleating agents, especially those mentioned above.

Polymerization in aqueous suspension is carried out in particular in the presence of at least one blowing agent, in an amount ranging from 3 to 23 parts, preferably from 4 to 17 parts, in particular from 4 to 12 parts by weight, per 100 parts by weight of styrene and optionally of comonomer(s) employed in the polymerization. Generally, a small portion of the blowing agent employed during the polymerization is lost and is not recovered in the expandable polystyrene composition after the polymerization. The blowing agent or agents may be selected from those mentioned above and may be introduced in their entirety at the beginning or during the polymerization, or else partly at the beginning and the remaining part in one or more portions during the polymerization. They may alternatively be introduced in a separate impregnation step.

Polymerization in aqueous suspension is carried out in the presence of the masterbatch which comprises a filler and a rubber, the masterbatch typically being dissolved or homogeneously distributed in styrene, in an amount ranging from 5 to less than 25 parts, preferably from 5 to 20 parts, in particular from 10 to 15 parts, by weight, per 100 parts by weight of styrene and optionally of comonomer(s). The masterbatch may be introduced at the beginning of and/or during the prepolymerization, preferably before a degree of polymer conversion of 40%, preferably 20%, in particular of 10%, has been reached. It is particularly preferred to introduce the masterbatch at the beginning of the prepolymerisation. Advantageously the aqueous suspension polymerization may include (i) a preliminary step of preparing an aqueous mixture comprising water and the suspension stabilizer(s) and, separately, (ii) a preliminary step of preparing an organic suspension comprising the styrene and, where appropriate, the comonomer(s), the masterbatch, some or all of the free-radical polymerization initiator(s), and where appropriate some or all of the blowing agent(s). The aqueous mixture and the organic suspension may be advantageously preheated separately to identical or different temperatures, such that no substantial polymerization begins in the organic suspension, and such that subsequently, by mixing of the organic suspension and the aqueous mixture thus preheated, an aqueous suspension is formed, with stirring, which is immediately in reaction, at a temperature greater than or equal to the temperature at which the polymerization commences spontaneously, for example at a temperature of at least 80°C, preferably at least 85°C and in particular of at least 90°C.

The present invention likewise pertains to the use of the expandable polystyrene composition for producing an expanded article, in particular an extruded or moulded article, having in particular a bulk density (or apparent density), measured according to method ASTM D 1622, ranging from 5 to 200 kg/m³, preferably from 50 to 180 kg/m³ and in particular from 5 to 150 kg/m³. The expanded article may in particular have a low or very low open cell content, measured according to method ASTM D 2856, of less than 10% for example, preferably less than 5% and in particular less than 2%. The invention pertains also to the use of a rubber-filler masterbatch in the preparation of EPS by so-called continuous production methods. Examples of these methods are WO03106544 or EP1702738. In such continuous production methods, a styrene polymer melt is typically mixed with a blowing agent and optional additives, and subsequently granulated to form expandable polymeric beads. The rubber-filler masterbatch may be homogenised with the styrene polymeric melt in single-screw or double screw extruders, or by applying mixing stations with static mixers. The resulting extruded and pelletised polymeric beads can be transformed in any standard EPS equipment to form foamed articles ranging in density from 5 to 150 kg/m3.

More particularly, the invention pertains to the use of the expandable polystyrene composition for producing an extruded and expanded article, having a bulk density (or apparent density) as mentioned above, ranging for example from 20 to 200 kg/m³, preferably from 30 to 180 kg/m³ and in particular from 30 to 150 kg/m³. The extruded and expanded article is produced in particular by a process consisting in (a) employing the composition by mixing the styrene polymer comprising the masterbatch of filler, in particular carbon black, and rubber in the melted state with the blowing agent(s), in particular a single-screw or twin-screw extruder, and under temperature and pressure conditions capable of preventing expansion of the composition, in particular at a temperature greater than the glass transition temperature, Tg, of the polymer, for example a temperature ranging from 120 to 150°C, preferably from 150 to 230°C, with stirring and under a pressure greater than atmospheric pressure, for example an absolute pressure ranging from 0.1 to 10 MPa, preferably from 0.2 to 5 MPa, then (b) extruding the mixture from the extruder, for example under a pressure equivalent to atmospheric pressure, so as to cause the composition to expand to the desired bulk density (or apparent density) and so form the extruded and expanded article.

The invention likewise pertains to another use of the expandable polystyrene composition, in the form in particular of expandable particles or, preferably expandable beads, for producing a moulded and expanded article having a bulk density (or apparent density) as mentioned above, for example ranging from 5 to 200 kg/m³, preferably from 5 to 100 kg/m³, in particular from 5 to 50 kg/m³, and especially from 5 to 30 kg/m³. The moulded and expanded article is produced in particular by a process comprising the following steps:
(i) a step of pre-expansion (or prefoaming) by contacting and mixing the composition, in particular in the form of expandable particles or expandable beads, with water vapour, in particular in a stirred tank and in particular under pressure and temperature conditions capable of forming expanded particles or beads having in particular a bulk density (or apparent density) ranging from 5 to 200 kg/m³, preferably from 5 to 100 kg/m³ and in particular from 5 to 50 or to 30 kg/m³, for example at a temperature ranging from 80 to 110°C, or from 85 to 105°C, and under an absolute pressure which can range from 20 to 160 kPa, or from 50 to 150 kPa,
(ii) optionally, a step of stabilisation (or maturation) the particles or beads thus expanded, by contacting them with ambient air, in particular at a temperature ranging from 0 to 40°C, and under an absolute pressure which can range from 50 to 130 kPa, preferably from 80 to 120 kPa, for a time which can range from a few hours to a few days, for example from 4 hours to 3 days, such as in particular to attain an equilibrium between the ambient air and the internal atmosphere of the expanded particles or beads, and
(iii) a step of moulding the particles or beads thus stabilized, by introducing them into a mould and by heating the mould, in particular so as to weld the particles or beads to one another, for example at a temperature ranging from 80 to 120°C, and so to produce a moulded and expanded article having in particular the desired bulk density (or apparent density) which, preferably, is substantially identical to that of the expanded particles or beads obtained in step (i).

Thus it has been found that, by virtue of the specific choice of the masterbatch, it is possible to provide an expandable polystyrene composition in the form in particular of particles or, preferably, of beads, this composition being capable of producing an expanded article containing a filler for example carbon black, in particular from 1 to 20 by weight relative to the styrene polymer, while having mechanical properties superior to those known to date for a similar charge of carbon black for a given level of thermal insulation performance. Accordingly the present invention likewise pertains to an expanded article having a bulk density (or apparent density), measured according to method ASTM D 1622, ranging from 5 to 200 kg/m³, this article being obtained by employing the expandable polystyrene composition described above or prepared by one of the processes described above. The expanded article may have in particular a low or very low open cell content (measured according to method ASTM D 2856) for example less than 10%, preferably less than 5%, in particular less than 2%. The expanded article advantageously exhibits a very low thermal conductivity, ranging for example from 25 to 50 mW/m.K, preferably from 28 to 45 mW/m.K.

More particularly, the invention relates to an extruded and expanded article having in particular a bulk density (or apparent density), measured according to method ASTM D 1622, ranging from 20 to 200 kg/m³, preferably from 30 to 180 kg/m³ and in particular from 50 to 150 kg/m³, this article being obtained by employing the expandable polystyrene composition as described above, or prepared by one of the processes described above, or else used according to one of the uses described above, by extrusion. The extruded and expanded article may advantageously have a low or very low open cell content, as described above, and also a very low thermal conductivity as mentioned above.

The invention likewise pertains to a moulded and extruded article having in particular a bulk density (or apparent density), measured according to method ASTM D 1622, ranging from 5 to 200 kg/m³, preferably from 5 to 100 kg/m³, in particular from 5 to 50 or 30 kg/m³, this article being obtained by employing the expandable polystyrene composition as described above, or prepared by one of the processes described above, or else used according to one of the uses described above, by moulding. The moulded and expanded article may advantageously have a low or very low open cell content, as described above, and a very low thermal conductivity as mentioned above.

The invention will now be illustrated by way of the following examples.

### Preparation of the Masterbatch

The masterbatch was prepared using standard rubber mixing equipment, in this case a Banbury internal mixer. The used batch mixer has a capacity of 5 kg. Mixing temperature is initially at room temperature, but due to shear forces, the temperature goes up, but is preferably kept below 100°C, depending on type of mixer, cooling, rubber and carbon black type. Mixing time is generally 2-15 minutes.

### Example 1

In a 5 liter stirred reactor 460 gram masterbatch of 33% wt/wt carbon black (type N550, producer : Cabot etc.) in rubber (DSM EPDM rubber) was dissolved in 3300 ml styrene and 0.5 gram cumylhydroperoxide. The solution was prepolymerised in mass polymerisation at 120°C for 2.5 hours. A 10 liter suspension reactor was filled with 5 liter of water and 19 grams of a copolymer of acrylic acid and ethylhexylacrylate and 15 mg potassium persulphate. The prepolymer was polymerised further in suspension in the suspension reactor, to which 16 grams of tert-butylperoxyethylhexylcarbonate was added. The temperature was held at 100°C for 2.5 hours, then heated up to 130°C in 2.5 hours and kept at 130°C for 1.5 hours and then cooled down. The resulting beads were impregnated with pentane in a water suspension. 2750 gram of the resulting polystyrene beads were suspended in 51 water and 10 grams of tricalciumphosphate to which 335ml pentane was added at 100°C in 9 hours.

### Comparative Example 2

Carbon black (FW101 provided by Degussa) was compounded using a twin screw extruder with high impact polystyrene based on EPDM rubber (Styrosun 6600 provided by Nova/Innovene). The HIPS and CB are gravimetrically dosed with a K'tron on the W&P ZSK30 twin-screw pilot extruder, (L/D=40, diameter of the screws are 30mm). A Gala die face cutter then pelletized the melt.

The extruder was run at 300 rpm, 230°C and 15kg/ hour. The resulting beads were impregnated with pentane in a water suspension. 2750 gram of the resulting polystyrene beads were suspended in 51 water and 10 grams of tricalciumphosphate to which 335ml pentane was added at 100°C in 9 hours.

### Comparative Example 3

Carbon black was dispersed in a polymerising styrene/water suspension and the styrene was polymerised and impregnated with blowing agent. This example shows that a product where carbon black was not introduced as a masterbatch gives good lambda (insulation) but inferior mechanical properties. In a 10 liter reactor 4000ml water 25 gram tricalcium phosphate 7 gram hydroxyethylcellulose 90 mg potassium persulphate were mixed with 4000 ml styrene, 6 gram BPO, 10 gram tert.butylperoxyethylhexylcarbonate, 3 grams PE wax. The reaction mixture was held for 2.5 hours at 90°C, then heated up in 3.3 hours to 115°C and kept at 115°C for 4.5 hours. After 7 hours 470ml pentane was added. 223gram Lampblack FW101 by Degussa was added after 180 minutes.

### Comparative Example 4

In a 5 liter stirred reactor 192 grams carbon black (type : Lampblack FW101, producer : Degussa), 192 gram rubber (DSM EPDM rubber) is dissolved in 3100 ml styrene and 0.5 gram cumylhydroperoxide. The solution was prepolymerised in mass polymerisation at 120°C for 2.5 hours. The 10 liter suspension reactor is filled with 5 liter water and 19 grams of a copolymer of acrylic acid and ethylhexylacrylate and 15 mg potassium persulphate. The resulting prepolymer is polymerised further in suspension, to which 16 grams of tert-butylperoxyethylhexylcarbonate is added. The temperature was held at 100°C for 2.5 hours, then heated up to 130°C in 2.5 hours and kept at 130°C for 1.5 hours and then cooled down. The resulting beads were impregnated with pentane in a water suspension. 2750 gram of the resulting polystyrene beads were suspended in 51 water and 10 grams of tricalciumphosphate to which 335ml pentane was added at 100°C. Carbon black was dispersed in a styrene/rubber mixture and polymerised in suspension. The resulting beads were impregnated with pentane in a water suspension. 2750 gram of the resulting polystyrene beads were suspended in 51 water and 10 grams of tricalciumphosphate to which 335ml pentane were added at 100°C in 9 hours.

The beads that were obtained from the examples were expanded, moulded and tested according to the description below.

### Expansion

The beads from the examples were expanded at 0.2 barg steam pressure using an Erlenbach PVD 80 batch expander. Expansion time is ca 10-60 seconds dependent on the desired density. The pre-foam obtained was dried in the expander at 50 °C and then emptied. The pre-foams of desired densities were retained and when required double passed after 3 hours maturing using a Handle pre-expander also at 0.2 barg steam pressure for ca 10-40 seconds. The retained pre-foam beads (17-25 kg/m3) were matured overnight prior to shape moulding.

The pre-foam was moulded (300×300×50 mm) on a Teubert contour moulding machine using standard processing conditions, i.e. 0.8 barg steam pressure, with pressure decay times of 10-100 seconds depending on density and type of material All the tiles were conditioned in an oven at 70 °C for a minimum of 48 hours before testing. The tiles were conditioned for 24 hours in an air-conditioned room (23°C and 50% relative humidity).

### Testing

Flexural strength and strain of the tiles were tested on the Zwick tensiometer I 2020 according to prEN 12089 test method B using a sample size of 300 x 150 x 50 mm at 10mm/min.

Compressive strength is tested on the Zwick tensiometer I 2020 according to EN 826 test method. 2 specimens (100 x 100 x 50 mm) were cut from the moulded foam and tested at 5 mm/min. The average values at 10% compression are reported.

The thermal conductivity of the foams (300 x 300 x 50 mm) at three different densities was measured using the Soft-K heat flow meter from Albatros, France. The mean temperature of the test was 10 °C, the cold and the hot plates being at 0 °C and 20 °C respectively. The Soft-K was calibrated using a reference sample; of which the λ-value was measured on the guarded hot plate apparatus according to ISO/DIS 8302 test method (absolute measurement of λ-value).

### Results

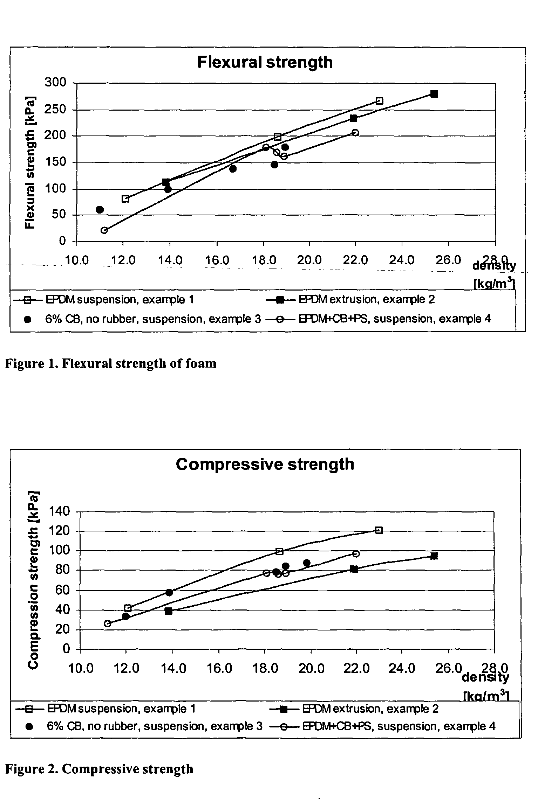

Figure 1 shows that the flexural strength is highest for examples 1 and 2 and is higher than example 3 and 4.

Figure 2 shows that the compression strength is highest for Example 1 at all densities. Example 2 is lowest, and Example 3 and 4 are in the middle.

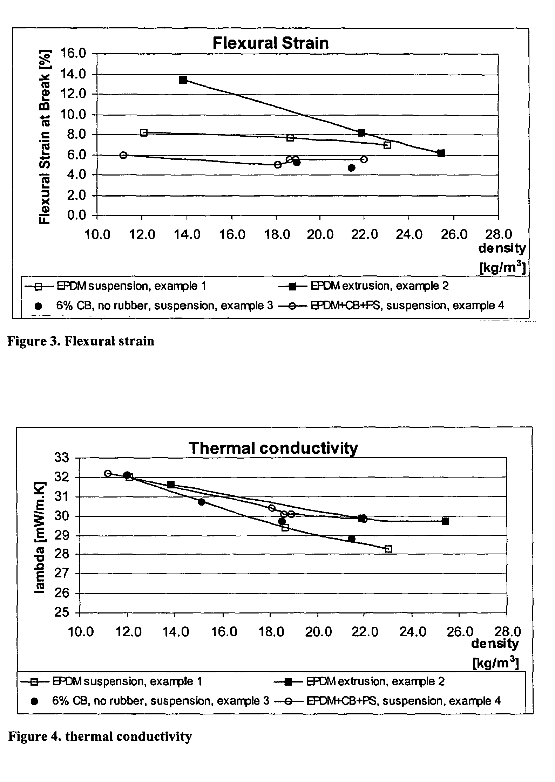

Figure 3 shows that the flexural strain is highest for Example 2 , followed by Example 1. Example 3 and 4 are standard polystyrene foam without any additions.

Figure 4 shows the thermal conductivity, which should be as low as possible. Example 1 is as good as the reference Example 3, where Example 2 and 4 are higher.

### Conclusion

Example 1 shows using a masterbatch of carbon black in rubber, gave overall the best results in maintaining a good balance of low thermal conductivity and high strength values compared to Example 3 where carbon black alone was added to the polymerisation mixture and Example 2, where carbon black is simply mixed with HIPS in an extruder.

Example 4 shows that dispersion of carbon black in a mixture of styrene/rubber and not pre-dispersing the carbon black in rubber leads to inferior insulation and mechanical properties.

## Claims

1. An expandable polystyrene composition comprising :
(1) 100 parts by weight of a polymer of styrene having in particular a weight-average molecular mass Mw ranging from 150 000 to 600 000 daltons,
(2) from 2 to 20 parts by weight of at least one blowing agent, and
(3) from 5 to less than 25 parts by weight of a masterbatch wherein the masterbatch comprises a filler and a rubber.

2. An expandable polystyrene composition as claimed in claim 1 wherein the filler is carbon black.

3. An expandable polystyrene composition as claimed in claim 2 wherein the carbon black is selected from carbon blacks having a very low pore volume.

4. An expandable polystyrene composition as claimed in any one of claims to 3 wherein the weight-average molecular mass, Mw, is in the range 170,000 - 500,000 daltons.

5. An expandable polystyrene composition as claimed in any one of claims 1 to 4 wherein the ratio of Mw to Mn, the number-average molecular mass is in the range from 1.5 to 4.0.

6. An expandable polystyrene composition according to any one of claims 1 to 5 wherein the rubber has a Tg below -10°C.

7. An expandable polystyrene composition according to claim 6 wherein the rubber is at least one of polybutadiene, a ethylene-propylene terpolymer, natural rubber, butyl rubber and nitrile rubber.

8. A process for preparing an expandable polystyrene composition comprising a filler in particular carbon black wherein the filler is introduced into a polymerisation step in the form of a masterbatch wherein the masterbatch comprises the filler and a rubber.

9. A process as claimed in claim 8 wherein the masterbatch is dissolved or homogeneously distributed in styrene.

10. A process as claimed in either claim 8 or 9 wherein the process comprises a prepolymerisation step in which the masterbatch is subject to a polymerisation prior to further polymerisation in aqueous suspension.
